# EUROPEAN PATENT SPECIFICATION

(11) **EP 2 493 230 B1**
(45) Date of publication and mention of the grant of the patent: **26.11.2014**
(21) Application number: 12154426.6
(22) Date of filing: 08.02.2012
(51) Int. Cl.: H04W 12/06, H04L 29/06

(54) **Method for authenticating mobile device and display apparatus using the same, and mobile device authentication system**
Verfahren zur Authentifizierung einer mobilen Vorrichtung und Anzeigevorrichtung damit, und Authentifzierungssystem für mobile Vorrichtung
Procédé pour l'authentification d'un dispositif mobile, appareil d'affichage l'utilisant et système d'authentification de dispositif mobile

(30) Priority: 23.02.2011 KR 20110016097
(43) Date of publication of application: 29.08.2012
(73) Proprietor: Samsung Electronics Co., Ltd., Suwon-si, Gyeonggi-do, 443-742 (KR)
(72) Inventor: Chung, Sung-moon, Gyeonggi-do (KR); Sung, Si-won, Gyeonggi-do (KR); Kim, Sung-soo, Seoul (KR); Kim, Sam-ryong, Gyeonggi-do (KR); Kim, Jong-lok, Seoul (KR); Ahn, Seong-ku, Gyeonggi-do (KR)
(74) Representative: Fearnside, Andrew Simon

(56) References cited:
- EP-A1- 2 239 918
- MCCUNE J M ET AL: "Seeing-Is-Believing: Using Camera Phones for Human-Verifiable Authentication", SECURITY AND PRIVACY, 2005 IEEE SYMPOSIUM ON OAKLAND, CA, USA 08-11 MAY 2005, PISCATAWAY, NJ, USA,IEEE, 8 May 2005 (2005-05-08), pages 110-124, XP010798367, DOI: 10.1109/SP.2005.19 ISBN: 978-0-7695-2339-2
- NITESH SAXENA: "Secure Device Pairing based on a Visual Channel", INTERNET CITATION, 1 January 2006 (2006-01-01), pages 1-17, XP007906602, Retrieved from the Internet: URL:http://eprint.iacr.org/2006/050.pdf [retrieved on 2008-12-10]
- SHINTARO MIZUNO ET AL: "AUTHENTICATION USING MULTIPLE COMMUNICATION CHANNELS", INTERNET CITATION, 11 November 2005 (2005-11-11), pages 54-62, XP002495045, ISBN: 978-1-59593-232-7 Retrieved from the Internet: URL:http://delivery.acm.org/ [retrieved on 2008-09-09]

## Description

### BACKGROUND

### 1. Field

Methods and apparatuses consistent with exemplary embodiments relate to a method for authenticating a mobile device and a display apparatus using the same, and a mobile device authentication system, and more particularly, though not exclusively to a method for authenticating a mobile device which is capable of controlling a display apparatus remotely, and a display apparatus using the same, and a mobile device authentication system.

### 2. Description of the Related Art

McCune J. M. et al. "Seeing-Is-Believing: Using Camera Phones for Human-Verifiable Authentication" describes a system that utilizes 2D barcodes and camera-phones to implement a visual channel for authentication and demonstrative identification of devices.

EP 2 239 918 A1 describes systems, devices, and methods to facilitate secure transmittal of security parameters. A representation of first data comprising a password is generated at the first computing device as an image or audio signal, the image or audio signal is transmitted from the first computing device to the second computing device, the password is determined from the image or audio signal at the second computing device, and a key exchange is performed between the first computing device and second computing device wherein a key is derived at each of the first and second computing devices.

As display apparatuses have been developed, recently introduced display apparatuses are able to operate as a computer as well as a device that simply outputs video signals. In order to effectively use and manage such a display apparatus, equipment or a program for controlling a variety of operations effectively has been increasingly demanded.

In order to control a display apparatus which is placed in a public place, embedded in a specific place, or suspended on the air in a related art method, a control device such as a keyboard or a mouse needs to be directly connected to the display apparatus. Alternatively, a user should access a server computer to control the display apparatus.

However, in the related art methods, it is difficult for the user to connect the control device such as the keyboard or the mouse to the display apparatus and also difficult to manage connected cables. Also, in the method of using the server computer to control the display apparatus, it is difficult for the user to intuitively know which display apparatus should be controlled and also difficult to troubleshoot on the spot. Furthermore, the display apparatus should be authenticated and registered in the server computer, and also, the user is required to go back to the place where the display apparatus is placed in order to check whether a commanded job is normally performed or not.

Therefore, there is a demand for a method of authenticating a mobile device, which is capable of controlling a display apparatus remotely, in order to control the display apparatus easily and intuitively.

### SUMMARY

According to the present invention there is provided an apparatus and method as set forth in the appended claims. Other features of the invention will be apparent from the dependent claims, and the description which follows.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a method for authenticating a mobile device, which, if a mobile device is sensed, generates a code image in which information on a display apparatus is encrypted, displays the code image, and authenticates the mobile device, and a display apparatus using the same, and a mobile device authentication system.

According to an aspect of an exemplary embodiment, there is provided a method for authenticating a mobile device of a display apparatus, the method including: if a mobile device is sensed, generating a code image in which information on the display apparatus is encrypted; displaying the generated code image on a screen; receiving information on the mobile device which is transmitted using the code image; and authenticating the mobile device using the received information on the mobile device.

The receiving may include, if the mobile device photographs the code image, encrypts the information on the mobile device along with the code image, and transmits the encrypted information on the mobile device and the code image to an external server, receiving the information on the mobile device through the external server.

The receiving may include receiving the information on the mobile device which is decrypted by the external server.

The method may further include, if the mobile device is authenticated, authorizing the mobile device to control the display apparatus.

The receiving may include, if the mobile device photographs the code image and obtains the information on the display apparatus by decrypting the code image, receiving the information on the mobile device from the mobile device.

The information on the mobile device may be encrypted, and the method may further include decrypting the information on the mobile device, and, if the mobile device is authenticated using the decrypted information on the mobile device, authorizing the mobile device to control the display apparatus.

The code image may include a combination of a plurality of geometrical figures of different colors.

The mobile device may be sensed if a specific signal transmitted from the mobile device is detected or if the mobile device is detected as being placed within a specific distance from the display apparatus.

The information on the display apparatus may include at least one of information on a method for authenticating the mobile device, hardware information of the display apparatus, network information of the display apparatus, system information of the display apparatus, content information of the display apparatus, and user schedule information stored in the display apparatus.

The information on the mobile device may include at least one of hardware information of the mobile device, network information of the mobile device, system information of the mobile device, content information of the mobile device, and user schedule information stored in the mobile device.

According to an aspect of another exemplary embodiment, there is provided a display apparatus including: a mobile device sensor which senses a mobile device; a code image generator which generates a code image in which information on the display apparatus is encrypted, if the mobile device is sensed by the mobile device sensor; a display unit which displays the generated code image; a communication unit which receives information on the mobile device which is transmitted using the code image; and an authentication unit which authenticates the mobile device using the received information on the mobile device.

If the mobile device photographs the code image, encrypts the information on the mobile device along with the code image, and transmits the encrypted information on the mobile device and the code image to an external server, the communication unit may receive the information on the mobile device through the external server.

The communication unit may receive the information on the mobile device which is decrypted by the external server.

The display apparatus may further include a controller which, if the mobile device is authenticated, authorizing the mobile device to control the display apparatus.

If the mobile device photographs the code image and obtains the information on the display apparatus by decrypting the code image, the communication unit may receive the information on the mobile device from the mobile device.

The information on the mobile device may be encrypted, and the display apparatus may further include a decryption unit which decrypts the information on the mobile device received through the communication unit, and a controller which, if the mobile device is authenticated using the decrypted information on the mobile device, authorizing the mobile device to control the display apparatus.

The display unit may display the code image which includes a combination of a plurality of geometrical figures of different colors.

The mobile device sensor may sense the mobile device, if it is detected that a specific signal is transmitted from the mobile device or that the mobile device is placed within a predetermined distance from the display apparatus.

The information on the display apparatus may include at least one of information on a method for authenticating the mobile device, hardware information of the display apparatus, network information of the display apparatus, system information of the display apparatus, content information of the display apparatus, and user schedule information stored in the display apparatus.

The information on the mobile device may include at least one of hardware information of the mobile device, network information of the mobile device, system information of the mobile device, content information of the mobile device, and user schedule information stored in the mobile device.

According to an aspect of still another exemplary embodiment, there is provided a mobile device authentication system which senses a mobile device to control a display apparatus, the mobile device authentication system including: the display apparatus which, if the mobile device is sensed, generates a code image in which information on the display apparatus is encrypted and displays the generated code image on a screen, and, if the mobile device photographs the code image and transmits the information on the display apparatus and information on the mobile device to a server, receives the information on the mobile device from the server and authenticates the mobile device; the mobile device which photographs the code image and obtains the information on the display apparatus, encrypts the information on the display apparatus and the information on the mobile device, and transmits the encrypted information on the display apparatus and the encrypted information on the mobile device to the server; and the server which receives the information on the display apparatus and the information on the mobile device from the mobile device and decrypts the received information on the display apparatus and the received information on the mobile device, and transmits the information on the display apparatus and the information on the mobile device to the mobile device and the display apparatus, respectively, and requests an authentication of the mobile device.

According to an aspect of still another exemplary embodiment, there is provided a mobile device authentication system which authenticates a mobile device to control a display apparatus, the mobile device authentication system including: the display apparatus which, if the mobile device is sensed, generates a code image in which information on the display apparatus is encrypted and displays the generated code image on a screen, and, if the mobile device photographs the code image and transmits information on the mobile device, receives the information on the mobile device from the mobile device and authenticates the mobile device; and the mobile device which photographs the code image and obtains the information on the display apparatus by decrypting the code image, and transmits the information on the mobile device to the display apparatus and requests an authentication from the display apparatus.

According to an aspect of another exemplary embodiment, there is provided a method for authenticating a mobile device by a display apparatus, the method including: capturing a displayed code image in which information on the display apparatus is encrypted; obtaining the information on the display apparatus by decrypting the captured code image; and transmitting, using the obtained information on the display apparatus, information on the mobile device to the display apparatus to request authentication to control the display apparatus.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

The above and/or other aspects will be more apparent by describing in detail exemplary embodiments, with reference to the accompanying drawings, in which:
FIG. 1 is a view illustrating a mobile device authentication system according to an exemplary embodiment;
FIG. 2 is a block diagram illustrating a display apparatus according to an exemplary embodiment;
FIG. 3 is a view illustrating a code image which is displayed on a display apparatus according to an exemplary embodiment;
FIG. 4 is a block diagram illustrating a mobile device according to an exemplary embodiment;
FIG. 5 is a block diagram illustrating a server according to an exemplary embodiment;
FIG. 6 is a flowchart illustrating a mobile device authenticating method of a server type according to an exemplary embodiment;
FIG. 7 is a flowchart illustrating a mobile device authenticating method of a non-server type according to an exemplary embodiment; and
FIG. 8 is a flowchart illustrating a method for authenticating a mobile device of a display apparatus according to an exemplary embodiment.

### DETAILED DESCRIPTION OF EXEMPLARY EMBODIMENTS

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail. Hereinafter, expressions such as "at least one of," when preceding a list of elements, modify the entire list of elements and do not modify the individual elements of the list.

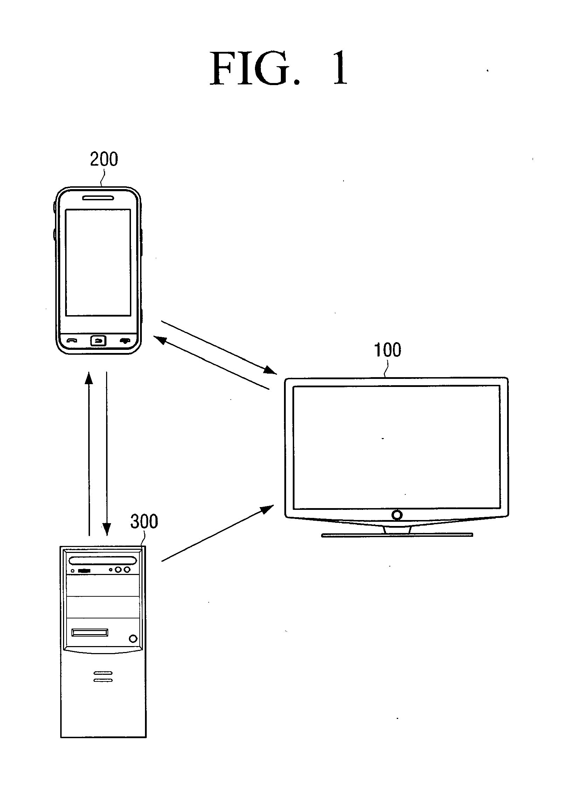

FIG. 1 is a view illustrating a mobile device authentication system 10 according to an exemplary embodiment. As shown in FIG. 1, the mobile device authentication system 10 includes a display apparatus 100, a mobile device 200, and a server 300.

The display apparatus 100 receives broadcast signals or video signals from an external source and outputs the received signals. The display apparatus 100 may be placed in a public place, embedded in a specific place, or suspended in the air.

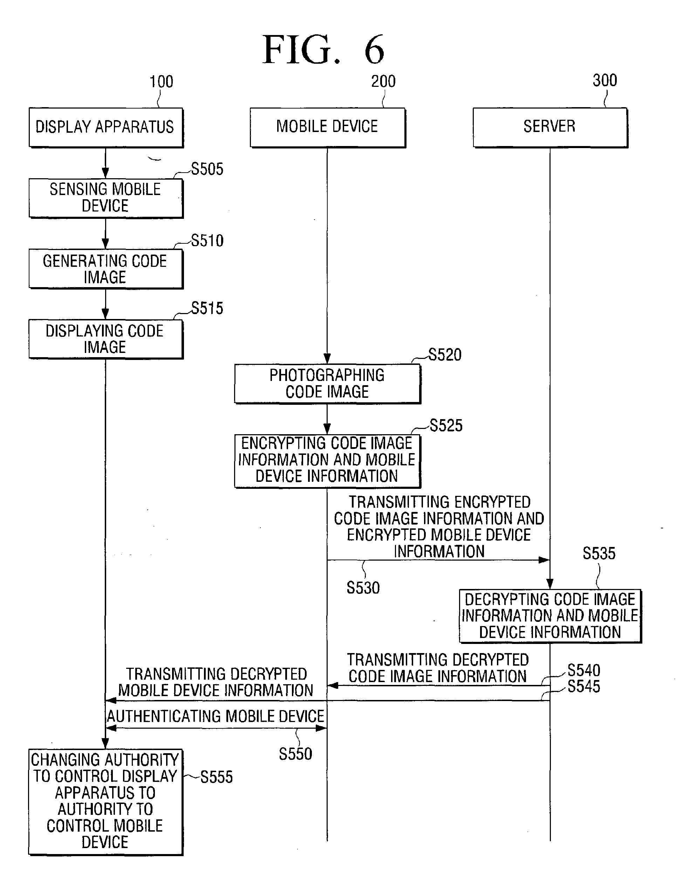

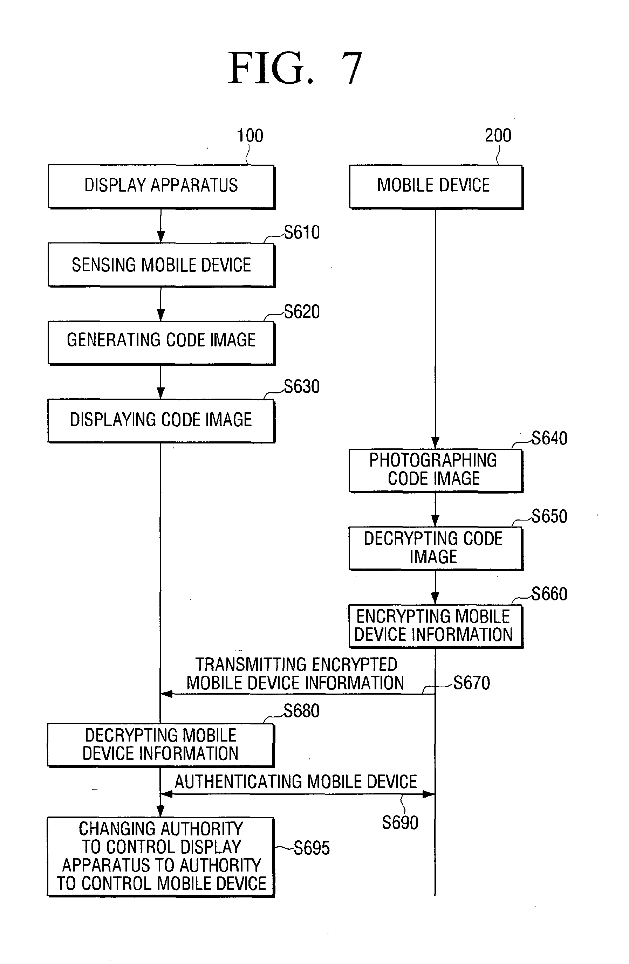

In particular, the display apparatus 100 authenticates the mobile device 200 so that the mobile device 200 can control the display apparatus 100 remotely. More specifically, the display apparatus 100 senses the mobile device 200 to control the display apparatus 100. If the mobile device 200 is sensed, the display apparatus 100 generates or obtains a code image in which information on the display apparatus 100 is encrypted and displays the generated code image. However, it is understood that another exemplary embodiment is not limited thereto. For example, according to another exemplary embodiment, the display apparatus 100 may not include a display unit 130 or screen to display the code image, and may simply output the code image to be displayed by an external device or screen. The code image may be an image that includes a combination of a plurality of geometrical figures of different colors. If the mobile device 200 or the server 300 receives the code image and transmits information on the mobile device 200 using the code image, the display apparatus 100 receives the information on the mobile device 200. The display apparatus 100 authenticates the mobile device 200 to control the display apparatus 100 using the received information on the mobile device 200. A method for authenticating the mobile device 200 through the mobile device 200 or the server 300 will be explained in detail below with reference to FIGS. 6 and 7.

The mobile device 200 is a portable device that is communicable with an external device in a wireless or wired manner. In particular, the mobile device 200 captures (e.g., photographs) the code image displayed on the display apparatus 100 and obtains information on the display apparatus 100, and then transmits the information on the mobile device 200 to the display apparatus 100 directly or transmits the information on the mobile device 200 to the display apparatus 100 via the server 300. If the display apparatus 100 authenticates the mobile device 200 using the information on the mobile device 200, the mobile device 200 is allowed to control the display apparatus 100 remotely.

The mobile device 200 may be realized as a smart phone, a personal digital assistant (PDA), a tablet personal computer, a mobile device, a portable multimedia player (PMP), a computer, etc.

The server 300 receives, from the mobile device 200, the code image in which the information on the display apparatus 100 is encrypted and the information on the mobile device 200. Also, the server 300 decrypts the received encrypted code image and the received information on the mobile device 200. The server 300 transmits the decrypted information on the display apparatus 100 (i.e., of the code image) and the decrypted information on the mobile device 200 to the mobile device 200 and the display apparatus 100, respectively, so that the mobile device 200 can be authenticated by the display apparatus 100.

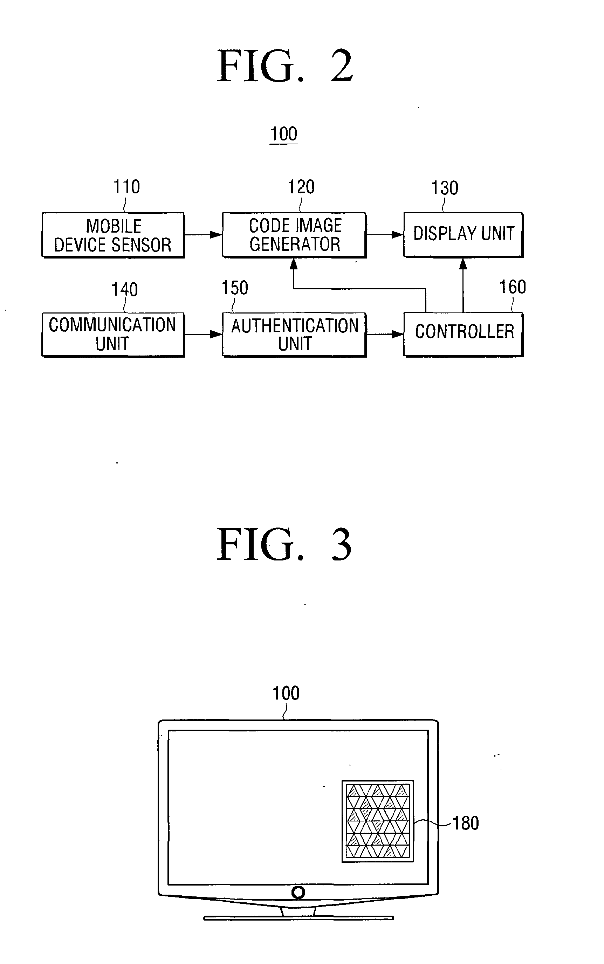

Hereinafter, the display apparatus 100, the mobile device 200, and the server 300 will be described in detail with reference to FIGS. 2 to 5. FIG. 2 is a block diagram illustrating the display apparatus 100 according to an exemplary embodiment. As shown in FIG. 2, the display apparatus 100 includes a mobile device sensor 110, a code image generator 120, a display unit 130, a communication unit 140, an authentication unit 150, and a controller 160.

The mobile device sensor 110 senses at least one of presence and absence of the mobile device 200 around the display apparatus 100. More specifically, the mobile device sensor 110 may receive a signal (e.g., an infrared ray (IR) signal, a radio frequency (RF) signal, etc.) that is transmitted when a specific button on the mobile device 200 is pressed, thereby sensing the presence/absence of the mobile device 200. Also, the mobile device sensor 110 may automatically sense whether the mobile device 200 exists within a predetermined distance using a short-distance network, thereby sensing the presence/absence of the mobile device 200. The short-distance network may be Bluetooth, Wi-Fi, local area network (LAN), ZigBee, WiMAX, etc.

If the mobile device 200 is sensed, the code image generator 120 generates a code image 180 to be displayed on a specific area of the display unit 130. The code image 180 refers to an image in which information on the display apparatus 100 is encrypted. The information on the display apparatus 100 may include at least one of information on a method for authenticating the mobile device 200, hardware information of the display apparatus 100, network information of the display apparatus 100, system information of the display apparatus 100, content information of the display apparatus 100, and user schedule information stored in the display apparatus 100.

In particular, the code image 180 is displayed on a specific area (for example, a right lower portion) on a screen of the display unit 130. Also, the code image 180 may include a combination of a plurality of geometrical figures of different colors. The code image 180 may include a plurality of colors to ensure that the code image 180 is recognized by the mobile device 200 even if the code image 180 is photographed by the mobile device 200 at a long distance.

The display unit 130 outputs video signals or broadcast signals received in a wired or wireless manner. In particular, if the mobile device 200 is sensed and the code image 180 is generated, the display unit 130 displays the generated code image 180 on the specific area of the screen. The code image 180 may be displayed to overlap an image which is being currently output from the display unit 130, though it is understood that another exemplary embodiment is not limited thereto (e.g., the code image 180 may be displayed on its own or may be displayed adjacent to the image which is being currently output from the display unit 130).

The display unit 130 may stop displaying the code image 180 when a predetermined time elapses.

The communication unit 140 connects the display apparatus 100 to the mobile device 200 or the server 300 via a wireless network. More specifically, if the mobile device 200 adopts a method of transmitting information directly to the display apparatus 100, the communication unit 140 receives the information on the mobile device 200 directly from the mobile device 200. On the other hand, if the mobile device 200 adopts a method of transmitting information via the server 300, the communication unit 140 receives the information on the mobile device 200 from the server 300. The information on the mobile device 200 may include at least one of hardware information of the mobile device 200, network information of the mobile device 200, system information of the mobile device 200, content information of the mobile device 200, and user schedule information stored in the mobile device 200.

If the mobile device 200 is authenticated by the display apparatus 100, the communication unit 140 may receive a control command from the mobile device 200.

The authentication unit 150 authenticates the mobile device 200 using the information on the mobile device 200 received through the communication unit 140. Since the received information on the mobile device 200 may be encrypted, the information may be decrypted by a decryption module (not shown).

The controller 160 controls an overall operation of the display apparatus 100. In particular, the controller 160 may be controlled, at least in part, by a button provided on the display apparatus 100 or the server 300. Also, if the mobile device 200 is authenticated, the controller 160 may authorize the mobile device 200 to control the display apparatus 100. Also, the controller 160 converts the control command received from the mobile device 200 into a command to control the display apparatus 100 and controls the display apparatus 100 accordingly.

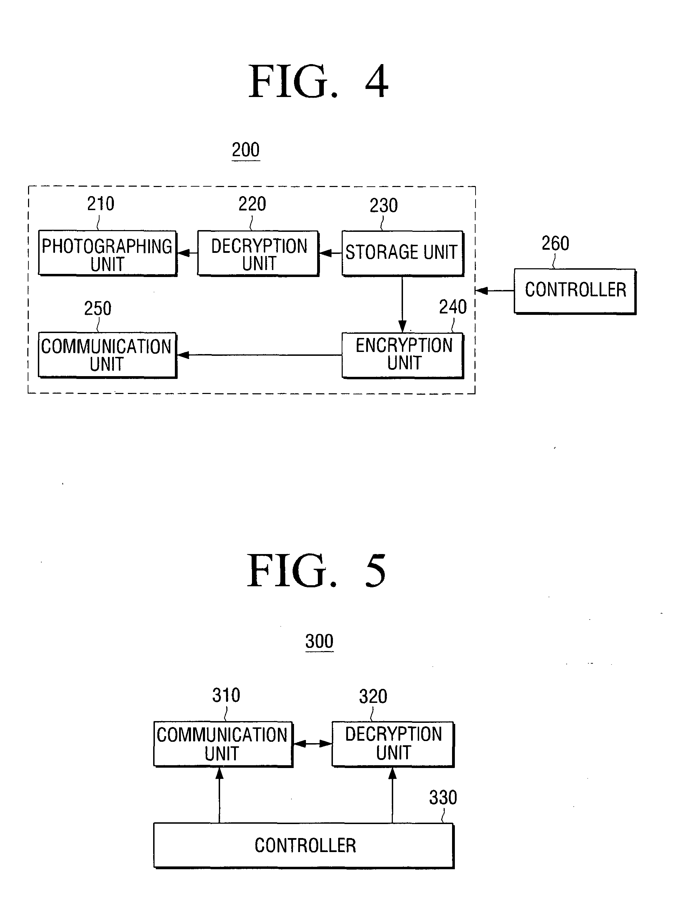

FIG. 4 is a block diagram illustrating the mobile device 200 according to an exemplary embodiment. As shown in FIG. 4, the mobile device 200 includes a photographing unit 210, a decryption unit 220, a storage unit 230, an encryption unit 240, a communication unit 250, and a controller 260.

The photographing unit 210 photographs the code image 180 of the display apparatus 100 using an image sensor.

The decryption unit 220 decrypts the photographed code image 180, thereby obtaining the information on the display apparatus 100. More specifically, since the code image 180 includes the encrypted information on the display apparatus 100, the decryption unit 220 decrypts the code image 180, thereby obtaining the information on the display apparatus 100. The information on the display apparatus 100 may include at least one of information on a method for authenticating the mobile device 200, hardware information of the display apparatus 100, network information of the display apparatus 100, system information of the display apparatus 100, content information of the display apparatus 100, and user schedule information stored in the display apparatus 100.

The storage unit 230 stores various data used to operate the mobile device 200, information on the mobile device 200 and decrypted information on the display apparatus 100.

The encryption unit 240 encrypts the information on the mobile device 200 to transmit the encrypted information to the display apparatus 100. In particular, if the mobile device 200 adopts a method of transmitting information to the display apparatus 100 directly to the display apparatus 100, the encryption unit 240 encrypts the information on the mobile device 200, and, if the mobile device 200 adopts a method of transmitting information to the display apparatus 100 via the server 300, the encryption unit 240 may add the information on the mobile device 200 to the information on the display apparatus 100, packages the information and encrypts the packaged information.

The communication unit 250 transmits the encrypted information on the mobile device 200 to the display apparatus 100 or the server 300. In particular, if the mobile device 200 adopts the method of transmitting information to the display apparatus 100 directly to the display apparatus, the communication unit 250 transmits the encrypted information on the mobile device 200, and, if the mobile device 200 adopts the method of transmitting information to the display apparatus 100 via the server 300, the communication unit 250 transmits the encrypted information on the mobile device 200 and the information on the display apparatus 100.

The controller 260 controls an overall operation of the mobile device 200. In particular, if the mobile device 200 is authenticated by the display apparatus 100, the controller 260 may transmit a control command to the display apparatus 100 to control the display apparatus 100.

The controller 260 controls the mobile device 200 to access the display apparatus 100 using the network information of the display apparatus 100 among, for example, the decrypted information on the display apparatus 100.

FIG. 5 is a block diagram illustrating the server 300 according to an exemplary embodiment. As shown in FIG. 5, the server 300 includes a communication unit 310, a decryption unit 320, and a controller 330.

The communication unit 310 receives the encrypted information on the mobile device 200 and the encrypted information on the display apparatus 100 from the mobile device 200. Also, if the received information on the mobile device 200 and the received information on the display apparatus 100 are decrypted by the decryption unit 320, the communication unit 310 transmits the decrypted information on the mobile device 200 to the display apparatus 100 and transmits the decrypted information on the display apparatus 100 to the mobile device 200. According to another exemplary embodiment, the communication unit 310 may transmit both the decrypted information on the mobile device 200 and the decrypted information on the display apparatus 100 to both the mobile device 200 and the display apparatus 100.

The decryption unit 320 decrypts the encrypted information on the mobile device 200 and the encrypted information on the display apparatus 100 received through the communication unit 310.

The controller 330 controls an overall operation of the server 300. In particular, the controller 330 controls the server 300 to transmit the decrypted information on the mobile device 200 to the display apparatus 100 so that the display apparatus 100 can authenticate the mobile device 200.

The mobile device 200 is authenticated by the display apparatus 100 as described above so that the user can control the display apparatus 100 using the mobile device 200 easily and intuitively.

Hereinafter, a method for authenticating a mobile device in a mobile device authentication system will be explained in detail with reference to FIGS. 6 and 7.

FIG. 6 is a flowchart illustrating a mobile device authenticating method of a server type according to an exemplary embodiment.

The display apparatus 100 senses the mobile device 200 (operation S505). The mobile device 200 may be sensed by detecting a signal that is received when a specific button on the mobile device 200 is pressed or when the mobile device 200 is placed within a specific distance. In the latter case, the mobile device 200 may be sensed using a short-distance network.

If the mobile device 200 is sensed, the display apparatus 100 generates the code image 180 in which the information on the display apparatus 100 is encrypted (operation S510). It is understood that another exemplary embodiment is not limited thereto, and the code image 180 may be previously generated, previously stored, etc. The code image 180 may be displayed on a specific area on a display screen and may include a combination of a plurality of geometrical figures of different colors, as shown in FIG. 3.

The display apparatus 100 displays the code image 180 (operation S515).

The mobile device 200 photographs the code image 180 using the photographing unit 210 (operation S520). The mobile device 200 encrypts information obtained from the photographed code image 180 and the information on the mobile device 200 (operation S525). Specifically, in operation S525, the mobile device 200 obtains the information on the display apparatus 100 by decrypting the code image, and then may package the obtained information on the display apparatus 100 along with the information on the mobile device 200 and encrypt the packaged information.

The mobile device 200 transmits the encrypted information on the code image 180 and the encrypted information on the mobile device 200 to the server 300 (operation S530).

The server 300 decrypts the information on the code image 180 and the information on the mobile device 200 received from the mobile device 200 (operation S535). The server 300 transmits the decrypted information on the code image 180, i.e., the information on the display apparatus 100, to the mobile device 200 (operation S540), and transmits the decrypted information on the mobile device 200 to the display apparatus 100 (operation S545). However, this is merely an example and the server 300 may transmit both the information on the display apparatus 100 and the information on the mobile device 200 to both the display apparatus 100 and the mobile device 200.

If the mobile device 200 requests an authentication from the display apparatus 100, the display apparatus 100 authenticates the mobile device 200 using the information on the mobile device 200 (operation S550). Also, the display apparatus 100 may authorize the mobile device 200 to control the display apparatus 100 (operation S555). For example, if the authority to control the display apparatus 100 is provided to the mobile device 200, the display apparatus 100 may update the content information of the display apparatus 100 and the schedule information stored in the display apparatus 100 using the content information of the mobile device 200 and the schedule information stored in the mobile device 200, which are included in the information on the mobile device 200.

As described above, the mobile device 200 may be authenticated by the display apparatus 100 using the server 300 so that the user can control the display apparatus 100 using the mobile device 200 easily and intuitively.

FIG. 7 is a flowchart illustrating a mobile device authenticating method of a non-server type according to an exemplary embodiment.

The display apparatus 100 senses the mobile device 200 (operation S610). As described above, the mobile device 200 may be sensed by detecting a signal that is received when a specific button on the mobile device 200 is pressed or when the mobile device 200 is placed within a predetermined distance. In the latter case, the mobile device 200 may be sensed using a short-distance network.

If the mobile device 200 is sensed, the display apparatus 100 generates the code image 180 in which the information on the display apparatus 100 is encrypted (operation S620) and displays the code image 180 (operation S630). It is understood that another exemplary embodiment is not limited thereto, and the code image 180 may be previously generated, previously stored, etc. The code image 180 may be displayed on a specific area on a display screen and may include a combination of a plurality of geometrical figures of different colors, as shown in FIG. 3.

If the code image 180 is displayed on the display apparatus 100, the mobile device 200 photographs the code image 180 displayed on the display apparatus 100 (operation S640). The mobile device 200 decrypts the code image 180 in which the information on the display apparatus 100 is encrypted (operation S650). Also, the mobile device 200 encrypts the information on the mobile device 200 (operation S660). The mobile device 200 requests an access to the display apparatus 100 while transmitting the encrypted information on the mobile device 200 (operation S670). For example, if an authenticating method of the mobile device 200 is a non-server type, the mobile device 200 transmits the encrypted information on the mobile device 200 to the display apparatus 100 using the network information of the display apparatus 100 among the information on the display apparatus 100, and requests an access to the display apparatus 100.

The display apparatus 100 decrypts the information on the mobile device 200 transmitted from the mobile device 200 (operation S680). Also, the display apparatus 100 authenticates the mobile device 200 as a device to control the display apparatus 100 (operation S690).

If the mobile device 200 is authenticated, the display apparatus 100 may authorize the mobile device 200 to control the display apparatus 100 (operation S695). If the authority to control the display apparatus 100 is provided to the mobile device 200, the display apparatus 100 may update the content information of the display apparatus 100 and the schedule information stored in the display apparatus 100 using the content information of the mobile device 200 and the schedule information stored in the mobile device 200, which are included in the information on the mobile device 200.

As described above, the mobile device 200 is authenticated by the display apparatus 100 using the code image 180 so that the user can control the display apparatus 100 using the mobile device 200 easily and intuitively.

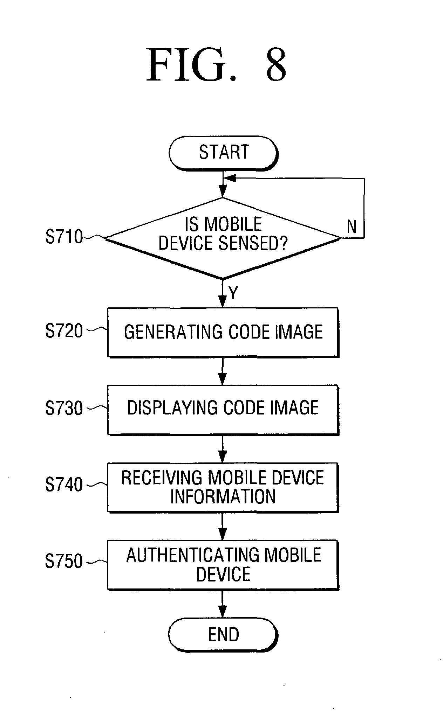

FIG. 8 is a flowchart illustrating a method for authenticating the mobile device 200 by the display apparatus 100 according to an exemplary embodiment.

The display apparatus 100 senses the mobile device 200 (operation S710). The display apparatus 100 may sense the mobile device 200 by detecting a signal that is received when a specific button on the mobile device 200 is pressed or when the mobile device 200 is placed within a specific distance. In the latter case, the mobile device 200 may be sensed using a short-distance network.

If the mobile device 200 is sensed (operation S710-Y), the display apparatus 100 generates the code image 180 (operation S720). The code image 180 refers to an image in which the information on the display apparatus 100 is encrypted and may be formed of a combination of a plurality of geometrical figure of different colors.

Also, the display apparatus 100 displays the code image 180 (operation S730).

If the mobile device 200 or the server 300 transmits the information on the mobile device 200 using the code image 180 (e.g., using information included in the code image), the display apparatus 100 receives the transmitted information on the mobile device 200 (operation S740).

The display apparatus 100 authenticates the mobile device 200 using the received information on the mobile device 200 (operation S750). Also, the display apparatus 100 authorizes the mobile device 200 to control the display apparatus 100.

Accordingly, the user can control the display apparatus 100 using the mobile device 200 easily and intuitively.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units of the above-described devices 100, 200, and 300 can include a processor or microprocessor executing a computer program stored in a computer-readable medium.

The foregoing exemplary embodiments and advantages are merely exemplary and are not to be construed as limiting the present inventive concept. Exemplary embodiments can be readily applied to other types of apparatuses. Also, the description of exemplary embodiments is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

## Claims

1. A method for authenticating a mobile device adapted to be capable of remotely controlling a display apparatus comprising a display screen, the method comprising:
if the mobile device is sensed (S710, S505, S610) by the display apparatus, generating a code image (S720, S510, S620) in which display apparatus information is encrypted;
displaying the generated code image (S730, S515, S630) on the display screen;
receiving at the display apparatus mobile device information (S740) which is transmitted using the display apparatus information from the code image;
authenticating (S750, S550, S690) the mobile device using the received mobile device information ; and
authorizing the mobile device to control the display apparatus (S555, S695).

2. The method as claimed in claim 1, wherein the receiving comprises:
if the mobile device photographs the code image, encrypting the mobile device information along with the photographed code image (S525), and transmitting the encrypted mobile device information and the code image to an external server (S530); and
receiving at the display apparatus the mobile device information through the external server.

3. The method as claimed in claim 2, wherein the receiving further comprises receiving at the display apparatus the mobile device information which is decrypted by the external server (S535, S545).

4. The method as claimed in any one of claims 1 to 3, further comprising:
updating at the display apparatus content information of the display apparatus or schedule information stored in the display apparatus using the mobile device information.

5. The method as claimed in any one of claims 1 to 4, wherein the receiving comprises, if the mobile device photographs the code image and obtains the display apparatus information by decrypting the photographed code image, receiving at the display apparatus the mobile device information from the mobile device directly (S670).

6. The method as claimed in claim 5, wherein:
the mobile device information is encrypted (S660) at the mobile device; and
the method further comprises decrypting at the display apparatus the encrypted mobile device information (S680).

7. The method as claimed in any one of claims 1 to 6, wherein the code image comprises a combination of a plurality of geometrical figures of different colors.

8. The method as claimed in any one of claims 1 to 7, wherein the mobile device is sensed if it is detected that a specific signal is transmitted from the mobile device or if it is detected that the mobile device is placed within a specific distance from the display apparatus.

9. The method as claimed in any one of claims 1 to 8, wherein the display apparatus information comprises at least one of information of a method for authenticating the mobile device, hardware information of the display apparatus, network information of the display apparatus, system information of the display apparatus, content information of the display apparatus, and user schedule information stored in the display apparatus.

10. The method as claimed in any one of claims 1 to 9, wherein the mobile device information comprises at least one of hardware information of the mobile device, network information of the mobile device, system information of the mobile device, content information of the mobile device, and user schedule information stored in the mobile device.

11. A display apparatus (100) comprising:
a mobile device sensor (110) adapted to sense a mobile device (200) to be authorised to control the display apparatus (100);
a code image generator (120) adapted to generate a code image in which display apparatus information is encrypted, if the mobile device is sensed by the mobile device sensor (110);
a display unit (130) comprising a display screen and adapted to display the generated code image on said display screen;
a communication unit (140) adapted to receive transmitted said mobile device information transmitted using the display apparatus information from the code image and
an authentication unit (150) adapted to authenticate the mobile device (200) using the received mobile device information , and to authorize the mobile device to control the display apparatus (100).

12. A mobile device authentication system which is adapted to sense a mobile device for controlling a display apparatus, the mobile device authentication system comprising:
the display apparatus (100) which is adapted to sense a mobile device (200) to be authorised to control the display apparatus;
a code image generator (120) adapted to generate a code image in which display apparatus information is encrypted, if the mobile device is sensed; and,
a display unit (130 comprising a display screen and adapted to display the generated code image on said screen ; and
a communication unit (140) adapted to receive mobile device information transmitted using the display apparatus information from the code image from a server, if the mobile device has photographed the code image and has transmitted the display apparatus information and mobile device information to the server; and,
an authentication unit (150) adapted to authenticate the mobile device , and authorize the mobile device to control the display apparatus;
the mobile device comprising a photographing unit (210) which is adapted to photograph the code image and obtain the display apparatus information;
an encryption unit (240) adapted to encrypt the obtained display apparatus information and the mobile device information; and
a communication unit (250) adapted to transmit the encrypted display apparatus information and the encrypted mobile device information to the server; and
the server (300) comprising a communication unit (310) which is adapted to receive the display apparatus information and the mobile device information from the mobile device;
a decryption unit (320) arranged to decrypt the received display apparatus information and the received mobile device information;
wherein the communication unit of the server is arranged to transmit the display apparatus information to the mobile device and the mobile device information to the display apparatus using the display apparatus information from the code image and to request an authentication of the mobile device.

## Patentansprüche

1. Verfahren zum Authentifizieren eines Mobilgeräts, das dafür ausgelegt ist, in der Lage zu sein, eine Anzeigevorrichtung, die einen Anzeigebildschirm umfasst, fernzusteuern, wobei das Verfahren Folgendes umfasst:
wenn das Mobilgerät durch die Anzeigevorrichtung erfasst wird (S710, S505, S610), Erzeugen eines Codebildes (S720, S510, S620), in dem Anzeigevorrichtungsinformationen verschlüsselt sind;
Anzeigen des erzeugten Codebildes (S730, S515, S630) auf dem Anzeigebildschirm;
Empfangen von Mobilgeräteinformationen (S740) in der Anzeigevorrichtung, die unter Verwendung der Anzeigevorrichtungsinformationen aus dem Codebild gesendet werden;
Authentifizieren (S750, S550, S690) des Mobilgeräts unter Verwendung der empfangenen Mobilgeräteinformationen; und
Autorisieren des Mobilgeräts für die Steuerung der Anzeigevorrichtung (S555, S695).

2. Verfahren nach Anspruch 1, wobei das Empfangen Folgendes umfasst:
wenn das Mobilgerät das Codebild fotografiert, Verschlüsseln der Mobilgeräteinformationen zusammen mit dem fotografierten Codebild (S525) und Senden der verschlüsselten Mobilgeräteinformationen und des Codebildes zu einem externen Server (S530); und
Empfangen der Mobilgeräteinformationen in der Anzeigevorrichtung mittels des externen Servers.

3. Verfahren nach Anspruch 2, wobei das Empfangen ferner umfasst, in der Anzeigevorrichtung die Mobilgeräteinformationen zu empfangen, die durch den externen Server (S535, S545) entschlüsselt werden.

4. Verfahren nach einem der Ansprüche 1 bis 3, ferner umfassend:
Aktualisieren von Inhaltsinformationen der Anzeigevorrichtung oder von in der Anzeigevorrichtung gespeicherten Ablaufplaninformationen in der Anzeigevorrichtung unter Verwendung der Mobilgeräteinformationen.

5. Verfahren nach einem der Ansprüche 1 bis 4, wobei das Empfangen umfasst, wenn das Mobilgerät das Codebild fotografiert und die Anzeigevorrichtungsinformationen durch Entschlüsseln des fotografierten Codebildes erhält, in der Anzeigevorrichtung die Mobilgeräteinformationen direkt von dem Mobilgerät zu empfangen (S670).

6. Verfahren nach Anspruch 5, wobei
die Mobilgeräteinformationen in dem Mobilgerät verschlüsselt werden (S660) und
das Verfahren ferner Entschlüsseln der verschlüsselten Mobilgeräteinformationen (S680) in der Anzeigevorrichtung umfasst.

7. Verfahren nach einem der Ansprüche 1 bis 6, wobei das Codebild eine Kombination mehrerer geometrischer Figuren verschiedener Farben umfasst.

8. Verfahren nach einem der Ansprüche 1 bis 7, wobei das Mobilgerät erfasst wird, wenn detektiert wird, dass ein spezifisches Signal von dem Mobilgerät gesendet wird oder wenn detektiert wird, dass das Mobilgerät in einer spezifischen Entfernung von der Anzeigevorrichtung platziert wird.

9. Verfahren nach einem der Ansprüche 1 bis 8, wobei die Anzeigevorrichtungsinformationen Informationen eines Verfahrens zum Authentifizieren des Mobilgeräts, Hardwareinformationen der Anzeigevorrichtung, Netzinformationen der Anzeigevorrichtung, Systeminformationen der Anzeigevorrichtung, Inhaltsinformationen der Anzeigevorrichtung und/oder Benutzerablaufplaninformationen, die in der Anzeigevorrichtung gespeichert werden, umfassen.

10. Verfahren nach einem der Ansprüche 1 bis 9, wobei die Mobilgeräteinformationen Hardwareinformationen des Mobilgeräts, Netzinformationen des Mobilgeräts, Systeminformationen des Mobilgeräts, Inhaltsinformationen des Mobilgeräts und/oder Benutzerablaufplaninformationen, die in dem Mobilgerät gespeichert werden, umfassen.

11. Anzeigevorrichtung (100), umfassend:
einen Mobilgerätesensor (110), ausgelegt zum Erfassen eines Mobilgeräts (200), das dafür autorisiert werden soll, die Anzeigevorrichtung (100) zu steuern;
einen Codebildgenerator (120), ausgelegt zum Erzeugen eines Codebildes, in dem Anzeigevorrichtungsinformationen verschlüsselt sind, wenn das Mobilgerät durch den Mobilgerätesensor (110) erfasst wird;
eine Anzeigeeinheit (130), die einen Anzeigebildschirm umfasst und dafür ausgelegt ist, das erzeugte Codebild auf dem Anzeigebildschirm anzuzeigen;
eine Kommunikationseinheit (140), ausgelegt zum Empfangen von gesendeten besagten Mobilgeräteinformationen, die unter Verwendung der Anzeigevorrichtungsinformationen aus dem Codebild gesendet werden, und
eine Authentifizierungseinheit (150), ausgelegt zum Authentifizieren des Mobilgeräts (200) unter Verwendung der empfangenen Mobilgeräteinformationen und zum Autorisieren des Mobilgeräts, die Anzeigevorrichtung (100) zu steuern.

12. Mobilgeräte-Authentifizierungssystem, das dafür ausgelegt ist, ein Mobilgerät zur Steuerung einer Anzeigevorrichtung zu erfassen, wobei das Mobilgeräte-Authentifizierungssystem Folgendes umfasst:
die Anzeigevorrichtung (100), die dafür ausgelegt ist, ein Mobilgerät (200) zu erfassen, das dafür autorisiert werden soll, die Anzeigevorrichtung zu steuern;
einen Codebildgenerator (120) ausgelegt zum Erzeugen eines Codebildes, in dem Anzeigevorrichtungsinformationen verschlüsselt sind, wenn das Mobilgerät erfasst wird;
eine Anzeigeeinheit (130), die einen Anzeigebildschirm umfasst und dafür ausgelegt ist, das erzeugte Codebild auf dem Bildschirm anzuzeigen; und
eine Kommunikationseinheit (140), ausgelegt zum Empfangen von Mobilgeräteinformationen, die unter Verwendung der Anzeigevorrichtungsinformationen aus dem Codebild gesendet werden, von einem Server, wenn das Mobilgerät das Codebild fotografiert hat und die Anzeigevorrichtungsinformationen und die Mobilgeräteinformationen zu dem Server gesendet hat; und
eine Authentifizierungseinheit (150), ausgelegt zum Authentifizieren des Mobilgeräts und Autorisieren des Mobilgeräts, die Anzeigevorrichtung zu steuern;
wobei das Mobilgerät eine Fotografiereinheit (210) umfasst, die dafür ausgelegt ist, das Codebild zu fotografieren und die Anzeigevorrichtungsinformationen zu erhalten;
eine Verschlüsselungseinheit (240), ausgelegt zum Verschlüsseln der erhaltenen Anzeigevorrichtungsinformationen und der Mobilgeräteinformationen; und
eine Kommunikationseinheit (250), ausgelegt zum Senden der verschlüsselten Anzeigevorrichtungsinformationen und der verschlüsselten Mobilgeräteinformationen zu dem Server; und
wobei der Server (300) eine Kommunikationseinheit (310) umfasst, die dafür ausgelegt ist, die Anzeigevorrichtungsinformationen und die Mobilgeräteinformationen von dem Mobilgerät zu empfangen;
eine Entschlüsselungseinheit (320), ausgelegt zum Entschlüsseln der empfangenen Anzeigevorrichtungsinformationen und der empfangenen Mobilgeräteinformationen;
wobei die Kommunikationseinheit des Servers ausgelegt ist zum Senden der Anzeigevorrichtungsinformationen zu dem Mobilgerät und der Mobilgeräteinformationen zu der Anzeigevorrichtung unter Verwendung der Anzeigevorrichtungsinformationen aus dem Codebild und zum Anfordern einer Authentifizierung des Mobilgeräts.

## Revendications

1. Procédé d'authentification d'un dispositif mobile conçu pour permettre la commande à distance d'un appareil d'affichage comprenant un écran d'affichage, le procédé comprenant :
si le dispositif mobile est détecté (S710, S505, S610) par l'appareil d'affichage, la génération d'une image de code (S720, S510, S620) dans laquelle des informations d'appareil d'affichage sont cryptées ; l'affichage de l'image de code générée (S730, S515, S630) sur l'écran d'affichage ;
la réception, au niveau de l'appareil d'affichage, d'informations de dispositif mobile (S740) qui sont transmises en utilisant les informations d'appareil d'affichage provenant de l'image de code ;
l'authentification (S750, S550, S690) du dispositif mobile en utilisant les informations de dispositif mobile reçues ; et
l'autorisation du dispositif mobile à commander l'appareil d'affichage (S555, S695).

2. Procédé selon la revendication 1, dans lequel la réception comprend:
si le dispositif mobile photographie l'image de code, le cryptage des informations de dispositif mobile en association avec l'image de code photographiée (S525), et la transmission des informations de dispositif mobile cryptées et de l'image de code à un serveur externe (S530) ; et
la réception au niveau de l'appareil d'affichage des informations de dispositif mobile par l'intermédiaire du serveur externe.

3. Procédé selon la revendication 2, dans lequel la réception comprend en outre la réception au niveau de l'appareil d'affichage des informations de dispositif mobile qui sont décryptées par le serveur externe (S535, S545).

4. Procédé selon l'une quelconque des revendications 1 à 3, comprenant en outre :
la mise à jour, au niveau de l'appareil d'affichage, d'informations de contenu de l'appareil d'affichage ou d'informations de planification stockées dans l'appareil d'affichage en utilisant les informations de dispositif mobile.

5. Procédé selon d'une quelconque des revendications 1 à 4, dans lequel la réception comprend, si le dispositif mobile photographie l'image de code et obtient les informations d'appareil d'affichage en décryptant l'image de code photographiée, la réception, au niveau de l'appareil d'affichage, des informations de dispositif mobile directement en provenance du dispositif mobile (S670).

6. procédé selon la revendication 5, dans lequel:
les informations de dispositif mobile sont cryptées (S660) au niveau du dispositif mobile ; et
le procédé consiste en outre à décrypter au niveau de l'appareil d'affichage les informations de dispositif mobile cryptées (S680).

7. Procédé selon l'une quelconque des revendications 1 à 6, dans lequel l'image de code comprend une combinaison d'une pluralité de figures géométriques de différentes couleurs.

8. Procédé selon l'une quelconque des revendications 1 à 7, dans lequel le dispositif mobile est détecté s'il est détecté qu'un signal spécifique est transmis depuis le dispositif mobile ou s'il est détecté que le dispositif mobile est placé à moins d'une distance spécifique de l'appareil d'affichage.

9. Procédé selon l'une quelconque des revendications 1 à 8, dans lequel les informations d'appareil d'affichage comprennent au moins l'une d'informations concernant un procédé d'authentification du dispositif mobile, d'informations matérielles concernant l'appareil d'affichage, d'informations de réseau concernant l'appareil d'affichage, d'informations système concernant l'appareil d'affichage, d'informations de contenu concernant l'appareil d'affichage, et d'informations de planification d'utilisateur stockées dans l'appareil d'affichage.

10. Procédé selon d'une quelconque des revendications 1 à 9, dans lequel les informations de dispositif mobile comprennent au moins l'une d'informations matérielles concernant le dispositif mobile, d'informations de réseau concernant le dispositif mobile, d'informations système concernant le dispositif mobile, d'informations de contenu concernant le dispositif mobile, et d'informations de planification d'utilisateur stockées dans le dispositif mobile.

11. Appareil d'affichage (100) comprenant :
un capteur de dispositif mobile (110) conçu pour détecter un dispositif mobile (200) devant être autorisé à commander l'appareil d'affichage (100) ;
un générateur d'image de code (120) conçu pour générer une image de code dans laquelle des informations d'appareil sont cryptées, si le dispositif mobile est détecté par le capteur de dispositif mobile (110) ;
une unité d'affichage (130) comprenant un écran d'affichage et conçue pour afficher l'image de code générée sur ledit écran d'affichage ;
une unité de communication (140) conçue pour recevoir lesdites informations de dispositif mobile transmises en utilisant les informations d'appareil d'affichage provenant de l'image de code ; et
une unité d'authentification (150) conçue pour authentifier le dispositif mobile (200) en utilisant les informations de dispositif mobile reçues, et pour autoriser le dispositif mobile à commander l'appareil d'affichage (100).

12. Système d'authentification de dispositif mobile conçu pour détecter un dispositif mobile destiné à commander un appareil d'affichage, le système d'authentification de dispositif mobile comprenant :
l'appareil d'affichage (100) qui est conçu pour détecter un dispositif mobile (200) devant être autorisé à commander l'appareil d'affichage ;
un générateur d'image de code (120) conçu pour générer une image de code dans laquelle des informations d'appareil d'affichage sont cryptées, si le dispositif mobile est détecté ; et
une unité d'affichage (130) comprenant un écran d'affichage et conçue pour afficher l'image de code générée sur ledit écran ; et
une unité de communication (140) conçue pour recevoir d'un serveur des informations de dispositif mobile en utilisant les informations d'appareil d'affichage provenant de l'image de code, si le dispositif mobile a photographié l'image de code et a transmis les informations d'appareil d'affichage et les informations de dispositif mobile au serveur ; et
une unité d'authentification (150) conçue pour authentifier le dispositif mobile et pour autoriser le dispositif mobile à commander l'appareil d'affichage ;
le dispositif mobile comprenant une unité de photographie (210) qui est conçue pour photographier l'image de code et obtenir des informations d'appareil d'affichage ;
une unité de cryptage (240) conçue pour crypter les informations d'appareil d'affichage obtenues et les informations de dispositif mobile ; et
une unité de communication (250) conçue pour transmettre les informations d'appareil d'affichage cryptées et les informations de dispositif mobile cryptées au serveur ; et
le serveur (300) comprenant une unité de communication (310) qui est conçue pour recevoir les informations d'appareil d'affichage et les informations de dispositif mobile en provenance du dispositif mobile ;
une unité de décryptage (320) conçue pour décrypter les informations d'appareil d'affichage reçues et les informations de dispositif mobile ;
dans lequel l'unité de communication du serveur est conçue pour transmettre les informations d'appareil d'affichage au dispositif mobile et les informations de dispositif mobile à l'appareil d'affichage en utilisant les informations d'appareil d'affichage provenant de l'image de code et pour demander une authentification du dispositif mobile.
